# EUROPEAN PATENT SPECIFICATION

(11) **EP 4 069 501 B1**
(45) Date of publication and mention of the grant of the patent: **07.02.2024**
(21) Application number: 20838288.7
(22) Date of filing: 12.11.2020
(51) Int. Cl.: B29D 30/06

(54) **PROCESS FOR TREATING A MEMBRANE FOR TYRE VULCANISATION APPARATUSES, PROCESS FOR VULCANISING AND MOULDING TYRES, MEMBRANE FOR TYRE VULCANISATION APPARATUSES AND VULCANISATION APPARATUS**
VULKANISATIONSVORRICHTUNG UND VERFAHREN ZUM VULKANISIEREN UND FORMEN VON REIFEN UND VERFAHREN ZUR BEHANDLUNG EINER MEMBRAN FÜR REIFENVULKANISATIONSVORRICHTUNGEN
APPAREIL DE VULCANISATION ET PROCÉDÉ DE VULCANISATION ET DE MOULAGE DE PNEUS ET PROCÉDÉ DE TRAITEMENT D'UNE MEMBRANE POUR APPAREILS DE VULCANISATION DE PNEUS

(30) Priority: 04.12.2019 IT 201900022914
(43) Date of publication of application: 12.10.2022
(73) Proprietor: Pirelli Tyre S.P.A., 20126 Milan (IT)
(72) Inventor: ANTOJ, Riccardo, 20126 Milano (IT); MARCHESE, Marco, 20126 Milano (IT); MICELI, Riccardo, 20126 Milan (IT)
(74) Representative: PGA S.p.A.
(86) International application number: PCT/IB2020/060655
(87) International publication number: WO 2021/111214

(56) References cited:
- JP-A- H09 123 175
- US-A1- 2008 053 621
- US-A1- 2018 133 985

## Description

### Technical field of the invention

The present invention relates to a vulcanisation apparatus and a process for vulcanising and moulding tyres and a process for treating a membrane for tyre vulcanisation apparatuses. The present invention also relates to a membrane for vulcanisation apparatuses for vulcanising and moulding tyres and a method for extending the operating lifetime of a membrane for tyre vulcanisation apparatuses. The present invention is situated in the field of processes and apparatuses for producing tyres for vehicle wheels.

A tyre for vehicle wheels generally comprises a carcass structure comprising at least one carcass ply having end flaps engaged with respective anchoring annular structures. In radially outer position with respect to the carcass structure, a belt structure is associated, comprising one or more belt layers, situated in radial superimposition with respect to each other and with respect to the carcass ply, having textile or metallic reinforcement cords with cross orientation and/or with orientation substantially parallel to the circumferential extension direction of the tyre. In radially outer position with respect to the belt structure, a tread band is applied, it too made of elastomeric material like other semifinished products constituting the tyre. The assembly of at least said belt structure and said tread band form the crown structure of the tyre. Respective sidewalls made of elastomeric material are also applied on the lateral surfaces of the carcass structure, each extended from one of the lateral edges of the tread band up to the respective anchoring annular structure to the beads. In the tyres of "tubeless" type, the carcass ply is internally covered by a layer of elastomeric material preferably with butyl base, normally termed "liner", having optimal air-impermeability characteristics and extended from one of the beads to the other.

The tyre production cycles provide for a building process in which the various structural components of the tyre itself are made and/or assembled on one or more drums. The built green tyres are transferred into a moulding and vulcanisation line where a moulding and vulcanisation process is actuated that is adapted to define the structure of the tyre according to a desired geometry and tread design.

### State of the art

The document WO2010/016073, in the name of the same Applicant, illustrates a process and an apparatus for moulding and vulcanising a tyre in which provision is made for introducing a green tyre in a vulcanisation mould. The mould comprises a first lateral plate and a second lateral plate, a ring with circumferential sectors which circumscribes a moulding cavity, an expandable chamber delimited by a membrane situated in the moulding cavity. The membrane is fixed to a central telescopic body and is expanded during the moulding and vulcanisation process in order to bring it against a radially inner surface of the green tyre, so as to externally press such surface while heat is administered. At the end of the process, the membrane is deflated before extracting the vulcanised tyre.

The document WO2015/166411, in the name of the same Applicant, illustrates a process for producing tyres for vehicle wheels in which provision is made for covering the external surface of an expandable chamber for tyre moulding and vulcanisation apparatuses with a crosslinkable polysiloxane composition, in order to facilitate the separation of surface of the expandable chamber from the radially inner surface of the vulcanised tyre.

The document KR20180084278 illustrates a process for vulcanising a tyre, in which a releasing and lubricating substance is applied between the tyre and an inflatable membrane of the vulcaniser, so as to facilitate the separation of such inflatable membrane from a radially inner surface of the tyre at the end of the vulcanisation process.

The document US 2018/133985 A1 discloses a method of manufacturing a tire curing bladder, wherein the method includes the steps of providing a curing bladder and applying an air barrier composition to the curing bladder to form an air barrier layer.

### Summary

Notwithstanding the use of release agents placed on the external surface of the membrane, the Applicant has observed that in some cases the membrane itself undergoes a breakage/deterioration such that it must be frequently substituted in order to prevent such breakage/deterioration and ensure the correct vulcanisation and quality of the produced tyres.

The Applicant has therefore felt the need to improve the processes and the apparatuses for vulcanising and moulding tyres.

The Applicant has in particular felt the need to reduce the deterioration of the properties of the membrane and increase the operating lifetime of the membrane, so as to decrease the frequency with which said membrane is substituted in the apparatus, i.e. so as to increase the number of vulcanisation cycles for each membrane.

In this context, the Applicant has observed that, at the end of each vulcanisation process, in order to be able to extract the vulcanised tyre and be able to introduce a green tyre to be vulcanised in the vulcanisation mould, the pressure in the chamber delimited by the membrane is brought below the outside pressure so that the membrane collapses and is crushed, first of all decreasing its radial bulk. Inner surfaces of the membrane adhere to hot parts constituting the vulcanisation apparatus, such as for example the abovementioned central telescopic body, and/or come into mutual contact. During such collapse and/or the subsequent expansion, the Applicant has observed that the abovementioned surfaces slide on each other and/or on the abovementioned hot parts of the vulcanisation apparatus. The Applicant has also observed that such sliding can lead to the early wear of the membrane.

The Applicant has also observed that the heated, pressurized fluids, which are injected within the membrane in order to make it expand and adhere to the tyre during the vulcanisation and which contain chemical agents and/or dirt particles, can interact with the material of the membrane and corrode it/wear it down.

The Applicant has found that the action of the sliding and/or of the fluids mentioned above can cause a quick deterioration of the properties of the membrane and/or the breakage thereof.

The Applicant has also found that the operating lifetime of the membrane can be increased by protecting the internal surface of the membrane so as to prevent the contact of the hot fluid, and of possible chemical-physical agents, with the material constituting the membrane and/or to facilitate the sliding, reducing the friction, between portions of the internal surface thereof and/or between the internal surface thereof and hot elements constituting the vulcanisation apparatus, in particular during the aforesaid collapse and crushing step.

According to a first aspect, the present invention relates to a process for treating a membrane for tyre vulcanisation and moulding apparatuses according to claim 1.

The Applicant deems that said at least one internal protective layer facilitates a sliding between the portions in mutual contact of the internal surface of the membrane and/or between the portions of the internal surface of the membrane and the elements of said apparatus and/or prevents a direct contact with a fluid inside the membrane.

In accordance with a second aspect, the present invention relates to a membrane for vulcanisation apparatuses for vulcanising and moulding tyres according to claim 14.

In accordance with a third aspect, the present invention relates to an apparatus for vulcanising and moulding tyres according to claim 15.

According to a fourth aspect, the present invention relates to a process for vulcanising and moulding tyres according to claim 10.

The present invention allows extending the operating lifetime of a membrane for vulcanisation apparatuses.

The present invention allows facilitating a sliding between the portions in mutual contact of the internal surface of the membrane and/or between the portions of the internal surface of the membrane and the elements of said apparatus and/or preventing a direct contact with a fluid inside the membrane by means of the application of at least one internal protective layer on the internal surface of said membrane.

The Applicant deems that the present invention allows reducing the wear of the membranes of the apparatuses for vulcanising and moulding tyres, slowing the deterioration thereof and hence increasing the useful operating lifetime of each single membrane.

In particular, the Applicant deems that the present invention allows increasing the number of tyres that can be vulcanised and moulded by means of each single membrane with respect to the use of a membrane lacking the internal protective layer/layers.

The Applicant deems that the present invention allows reducing the costs and the times relative to the moulding and vulcanisation processes due to the fact that the number of membranes used is reduced and due to the fact that less machine stops are necessary and less manpower hours are required for substituting the worn-out membranes.

The Applicant deems that the present invention also allows increasing the reliability of the apparatuses and of the moulding and vulcanisation processes and reducing the probability of making defective tyres (which would be discarded), since the membranes are less subjected to wear and/or to breakage.

The present invention, in at least one of the aforesaid aspects, can have one or more of the preferred characteristics which are described hereinbelow.

Preferably, the membrane comprises or provision is made for applying at least three internal protective layers that are mutually superimposed.

Preferably, the membrane comprises or provision is made for applying four internal protective layers that are mutually superimposed.

Preferably, said at least one internal protective layer is applied on the entire internal surface or covers the entire internal surface.

Preferably, provision is made for covering the entire internal surface with said at least one internal protective layer.

Preferably, said at least one internal protective layer has a thickness greater than or equal to 0.02 mm, more preferably greater than or equal to 0.025 mm.

Preferably, said at least one internal protective layer has a thickness smaller than or equal to 0.10 mm, more preferably smaller than or equal to 0.04 mm.

Preferably, each internal protective layer has a thickness greater than or equal to 0.02 mm, and smaller than or equal to 0.10 mm.

Preferably, each internal protective layer has a thickness greater than or equal to 0.025 mm, and smaller than or equal to 0.04 mm.

Preferably, said at least one internal protective layer adheres to the membrane and follows the movements and the deformations thereof.

Preferably, said at least one internal protective layer is flexible.

Preferably, said at least one internal protective layer is elastic.

Preferably, said at least one internal protective layer is anti-adherent, in the sense that a portion thereof does not remain attached to the other (when portions of the internal surface of the membrane lie in mutual contact) or to the elements of said apparatus.

Preferably, said at least one internal protective layer is anti-abrasive, in the sense that one portion thereof tends to slide on the other (when portions of the internal surface of the membrane lie in mutual contact) or on the elements of said apparatus.

Preferably, said at least one internal protective layer comprises polysiloxane.

Preferably, said at least one internal protective layer comprises polysiloxane substantially crosslinked.

Preferably, applying said at least one internal protective layer comprises: preparing a substantially crosslinkable composition.

More preferably, applying said at least one internal protective layer comprises repeating the operations a) and b) at least twice (for a total of three protective layers).

More preferably, applying said at least one internal protective layer comprises repeating the operations a) and b) at least three times (for a total of four protective layers).

Preferably, said at least one internal protective layer is applied before mounting said membrane on an apparatus for vulcanising and moulding tyres.

Preferably, the substantially crosslinkable composition is polysiloxane.

Preferably, the substantially crosslinkable composition comprises: at least one reactive polysiloxane oil, at least one crosslinking agent configured for reacting with the reactive polysiloxane oil.

Preferably, the operation a) comprises: applying the substantially crosslinkable composition on the internal surface by means of a sponge or a brush.

Preferably, the operation a) comprises: spraying the substantially crosslinkable composition on the internal surface.

Preferably, during the application, the substantially crosslinkable composition is in liquid or semi-solid form or is substantially gaseous.

Preferably, the operation a) comprises: applying a quantity of substantially crosslinkable composition greater than or equal to 5 g, more preferably greater than or equal to 10 g.

Preferably, the operation a) comprises: applying a quantity of substantially crosslinkable composition lower than or equal to 30 g, more preferably lower than or equal to 20 g.

Preferably, the operation a) comprises: applying a quantity of substantially crosslinkable composition greater than or equal to 5 g and lower than or equal to 30 g.

Preferably, the operation a) comprises: applying a quantity of substantially crosslinkable composition greater than or equal to 10 g and lower than or equal to 20 g.

Preferably, the operation b) comprises: heating the membrane, more preferably in an oven or stove.

Preferably, the membrane is placed in the oven at a temperature greater than or equal to 140°C, more preferably greater than or equal to 160°C.

Preferably, the membrane is placed in the oven at a temperature lower than or equal to 180°C, more preferably lower than or equal to 170°C.

Preferably, the membrane is placed in the oven at a temperature greater than or equal to 140°C and lower than or equal to 180°C.

Preferably, the membrane is placed in the oven at a temperature greater than or equal to 160°C and lower than or equal to 170°C.

Preferably, the membrane is placed in the oven for a heating time greater than or equal to 50 minutes, more preferably greater than or equal to 60 minutes.

Preferably, the membrane is placed in the oven for a heating time lower than or equal to 70 minutes, more preferably lower than or equal to 65 minutes.

Preferably, the membrane is placed in the oven for a heating time greater than or equal to 50 minutes and lower than or equal to 70 minutes.

Preferably, the membrane is placed in the oven for a heating time greater than or equal to 60 minutes and lower than or equal to 65 minutes.

Preferably, provision is made for extracting the membrane from the oven and allowing it to cool.

Preferably, the membrane is allowed to cool at room temperature.

Preferably, the membrane is allowed to cool for a cooling time greater than or equal to 2 hours, more preferably greater than or equal to 3 hours.

Preferably, the membrane is allowed to cool for a cooling time lower than or equal to 4.5 hours, more preferably lower than or equal to 4 hours.

Preferably, the membrane is allowed to cool for a cooling time greater than or equal to 2 hours and lower than or equal to 4.5 hours.

Preferably, the membrane is allowed to cool for a cooling time greater than or equal to 3 hours and lower than or equal to 4 hours.

Preferably, the membrane comprises at least one external protective layer applied on the external surface, in order to facilitate a separation of the membrane from the radially inner surface of the vulcanised and moulded tyre.

Preferably, provision is made for applying at least one external protective layer on the external surface of the membrane.

Preferably, said at least one internal protective layer and said at least one external protective layer are made of a same substance/material.

Preferably, provision is made for applying the same substantially crosslinkable composition on the internal surface and on the external surface.

Preferably, provision is made for applying the external protective layer substantially with the same modes of application of the internal protective layer.

Preferably, provision is made for applying the external protective layer at least partially simultaneously with the internal protective layer.

Preferably, provision is made for:
d) covering the internal surface and the external surface with said substantially crosslinkable composition;
e) crosslinking said substantially crosslinkable composition on the internal surface and on the external surface.

Preferably, provision is made for:
f) repeating the operations d) and e) at least once.

Preferably provision is made for repeating the operations d) and e) at least twice.

Preferably provision is made for repeating the operations d) and e) at least three times.

Preferably, the membrane is flexible and more preferably elastic.

Preferably, the membrane comprises at least one crosslinkable rubber selected from among natural or synthetic rubbers, more preferably comprises a blend with butyl rubber base.

Preferably, the membrane has a thickness greater than or equal to 3 mm, more preferably greater than or equal to 4 mm.

Preferably, the membrane has a thickness smaller than or equal to 6 mm, more preferably smaller than or equal to 5 mm.

Preferably, the membrane has a thickness greater than or equal to 3 mm and smaller than or equal to 6 mm.

Preferably, the membrane has a thickness greater than or equal to 4 mm and smaller than or equal to 5 mm.

Preferably, in a rest configuration, i.e. when it is not subjected to loads, the membrane has a tubular shape or substantially tubular shape or substantially toroidal shape and similar to a shape of a tyre.

Preferably, the membrane has circumferential edges with anchorage appendages anchored or anchorable to the parts of the apparatus.

Preferably, at least in the expanded or inflated configuration, the membrane has a substantially toroidal shape that copies a radially inner shape of a tyre.

Preferably, at least in the contracted configuration, the membrane is collected towards a central axis of the apparatus and at least in part in contact with elements of said apparatus.

Preferably, at least in the contracted configuration, a portion of the membrane in proximity to an axial symmetry plane thereof is collected towards a central axis of the apparatus and at least in part in contact with elements of said apparatus. Preferably, in a rest configuration, a pressure inside the expandable chamber is equal to an external pressure and, more preferably, the membrane has a barrel shape.

Preferably, a part of the apparatus comprises anchoring zones for the anchorage appendages of the membrane; wherein said anchoring zones are positioned, at least when the vulcanisation mould is closed, at the portions of the apparatus configured for receiving the beads of the tyre.

Preferably, the vulcanisation mould comprises a lower portion and an upper portion that can be mutually coupled at an axial symmetry plane and configured for internally delimiting a vulcanisation and moulding cavity.

Preferably, the vulcanisation mould comprises a work surface arranged to operate on beads and on sidewalls of the green tyre to be vulcanised and a circumferential surface arranged to operate against a tread band of the green tyre to be vulcanised.

Preferably, the vulcanisation mould comprises a pair of half-shells that are axially opposite.

Preferably, each of the half-shells comprises a work surface arranged to operate on beads and on sidewalls of the green tyre to be vulcanised.

Preferably, the vulcanisation mould comprises a plurality of circumferential sectors, wherein said circumferential sectors, mutually adjacent, define a circumferential surface arranged to operate against a tread band of the green tyre to be vulcanised.

Preferably, a part of the apparatus comprises a central stem coupled to a pair of flanges that are spaced from each other; wherein each of the flanges carries one of the anchoring zones for the anchorage appendages of the membrane. Preferably, at least in the contracted configuration, a portion of the membrane in proximity to an axial symmetry plane thereof is at least in part in contact with the central stem.

Preferably, inflating the membrane comprises: introducing a hot and pressurized fluid within the expandable chamber.

Preferably, the (relative) pressure of the fluids and/or gases used for vulcanising the tyre in the expandable chamber is greater than or equal to 0.15 bar, more preferably greater than or equal to 0.2 bar.

Preferably, the (relative) pressure of the fluids and/or gases used for vulcanising the tyre in the expandable chamber is lower than or equal to 30 bar, more preferably lower than or equal to 25 bar.

Preferably, the (relative) pressure of the fluids and/or gases used for vulcanising the tyre in the expandable chamber is greater than or equal to 0.15 bar and lower than or equal to 30 bar.

Preferably, the (relative) pressure of the fluids and/or gases used for vulcanising the tyre in the expandable chamber is greater than or equal to 0.2 bar and lower than or equal to 25 bar.

Preferably, the apparatus comprises a generator and/or a tank of a hot and pressurized fluid operatively connected to the expandable chamber.

Preferably, the hot and pressurized fluid is gas, more preferably nitrogen.

Preferably, the hot and pressurized fluid is water vapour.

Preferably, contracting the membrane comprises: extracting the hot fluid and possible air up to reducing a pressure inside the expandable chamber such that it falls below a pressure outside said expandable chamber.

Preferably, the apparatus comprises a vacuum pump operatively connected or connectable to the expandable chamber in order to reduce a pressure inside the expandable chamber such that it falls below a pressure outside said expandable chamber.

Preferably, provision is made for substituting the membrane of an apparatus after a number of vulcanised and moulded tyres greater than or equal to 300, preferably greater than or equal to 350.

Preferably, provision is made for substituting the membrane of an apparatus after a number of vulcanised and moulded tyres lower than or equal to 600, preferably lower than or equal to 500.

Preferably, provision is made for substituting the membrane of said apparatus after a number of vulcanised and moulded tyres greater than or equal to 300 and lower than or equal to 600.

Preferably, provision is made for substituting the membrane of said apparatus after a number of vulcanised and moulded tyres greater than or equal to 350 and lower than or equal to 500.

Further characteristics and advantages will be clearer from the detailed description of preferred but not exclusive embodiments of a membrane for vulcanisation apparatuses for vulcanising and moulding tyres and of a process for treating a membrane for tyre vulcanisation apparatuses according to the present invention.

### Description of the drawings

Such description will be set forth hereinbelow with reference to the enclosed drawings, provided only as a non-limiting example, in which:
- figure 1 show, in diameter section, a portion of a vulcanisation apparatus for vulcanising and moulding tyres in an initial step of a process for vulcanising and moulding tyres;
- figures 2, 3, 4 and 5 schematically illustrate the vulcanisation apparatus in respective operating steps;
- figure 6 illustrates a membrane for vulcanisation apparatuses in an undeformed configuration during a treatment operation;
- figure 7 illustrates an enlarged half-section of the membrane of figure 6;
- figure 8 illustrates a further operation for treating the membrane of figure 6;
- figures 9, 10 and 11 illustrate respective enlarged portions of the membrane of figure 6;
- figure 12 is a radial half-section of a tyre for vehicle wheels.

### Detailed description

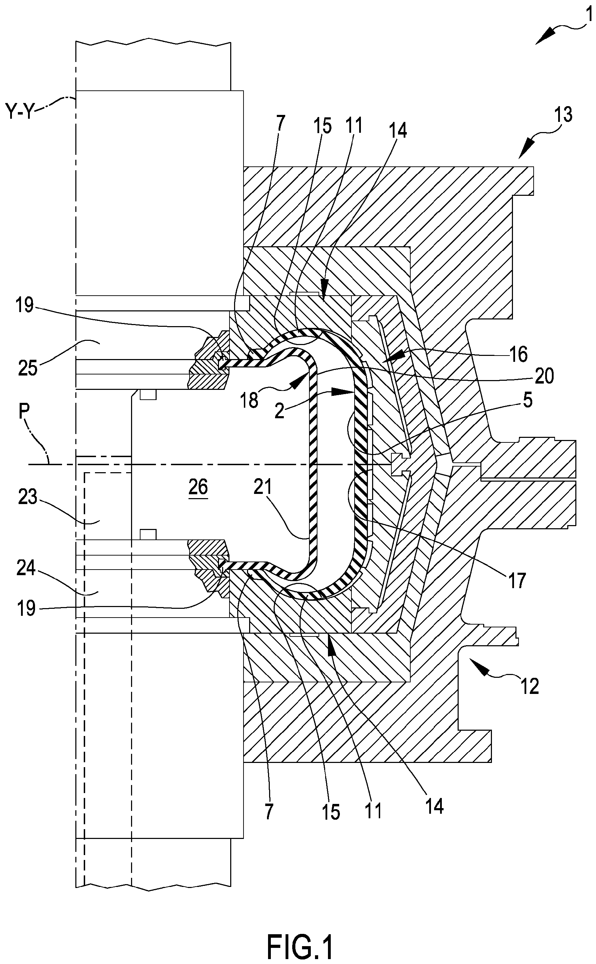

Figure 1 illustrates a portion of a vulcanisation apparatus for vulcanising and moulding tyres 2.

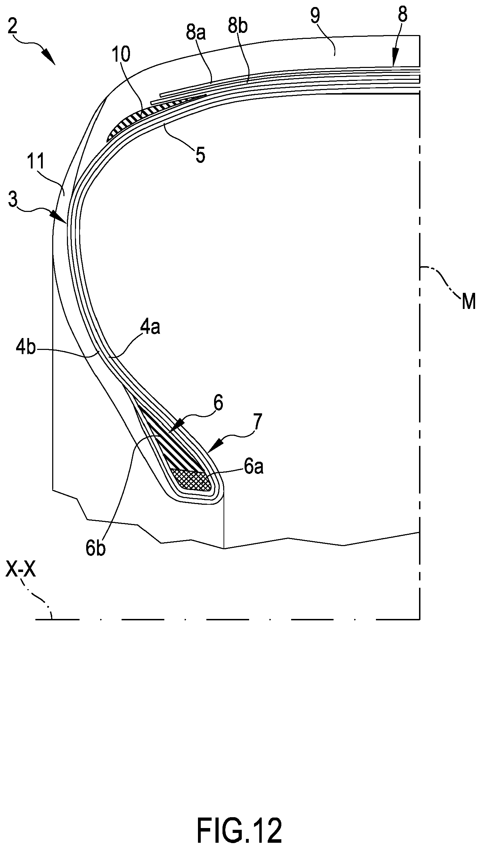

A tyre 2 is illustrated in figure 12 and essentially comprises a carcass structure 3 having one / two carcass ply/plies 4a / 4a, 4b. A layer of impermeable elastomeric material or so-called liner 5 is applied inside the carcass ply/plies 4a / 4a, 4b. Two anchoring annular structures 6, each comprising a so-called bead core 6a carrying an elastomeric filler 6b in radially outer position, are engaged with respective end flaps of the carcass ply/plies 4a / 4a, 4b. The anchoring annular structures 6 are integrated in proximity to zones normally identified with the name "beads" 7, at which the engagement between the tyre 2 and a respective mounting rim usually occurs. A belt structure 8 comprising for instance belt layers 8a, 8b is circumferentially applied around the carcass ply/plies 4a / 4a, 4b, and a tread band 9 is circumferentially superimposed on the belt structure 8. The belt structure 8 can be associated with so-called "under-belt inserts" 10, each situated between the carcass ply/plies 4a / 4a, 4b and one of the axially opposite terminal edges of the belt structure 8. Two sidewalls 11, each extended from the corresponding bead 7 to a corresponding lateral edge of the tread band 9, are applied in laterally opposite positions on the carcass ply/plies 4a / 4a, 4b. The portion of each sidewall 11 close to the lateral edge of the tread band 9 is known as the shoulder of the tyre 2. The tyre 2 has an axial symmetry plane "M" equidistant from the respective beads 7 and perpendicular to the rotation axis "X-X" thereof.

As is visible in figures 1-5, the vulcanisation apparatus 1 for vulcanising and moulding tyres 2 comprises a vulcanisation mould comprising a lower portion 12 and an upper portion 13 mutually couplable at an axial symmetry plane P. Each of said lower portion 12 and upper portion 13 comprises a respective half-shell 14. The two half-shells 14 are axially opposite. Each of the half-shells 14 comprises a work surface 15 arranged to operate on beads 7 and on sidewalls 11 of a green tyre 2. The lower portion 12 and the upper portion 13 are axially movable between a first position, in which they lie mutually spaced, and a second position, in which they lie adjacent to each other.

The vulcanisation mould comprises a plurality of circumferential sectors 16 arranged all around a central axis "Y-Y" of the apparatus 1. The circumferential sectors 16 are movable between a first position, in which they are circumferentially spaced from each other and more distant from the central axis "Y-Y", and a second position, in which they are circumferentially adjacent to each other and closer to the central axis "Y-Y". The mutually adjacent circumferential sectors 16 define a circumferential surface 17 arranged to operate against the tread band of the green tyre 2 to be vulcanised.

When the circumferential sectors 16 are in the second position and the lower portion 12 and the upper portion 13 are mutually coupled at the axial symmetry plane P, the work surfaces 15 and the circumferential surface 17 delimit a vulcanisation and moulding cavity configured for receiving a green tyre 2 and having a shape corresponding to an external shape to be conferred to the tyre 2 once moulded and vulcanised.

A flexible and elastic membrane 18, e.g. made with a blend with butyl rubber base, is installed on the apparatus 1. The membrane 18 has for example an average thickness of 4.5 mm. The membrane 18, when it is at rest, i.e. not subjected to loads, for example simply abutted against a surface, has a shape thereof similar to the shape of a tyre, i.e. to a radially outer portion of a toroid, and therefore has a respective central axis "Z-Z". The membrane 18 has a pair of radially inner circumferential edges 19 provided with anchorage appendages configured for being anchored to a part of the apparatus 1. The membrane 18 has an external surface 20 and an internal surface 21, opposite the external surface 20. The internal surface 21 is mainly directed towards the central axis "Z-Z" thereof. The external surface 20 is mainly directed radially and externally with respect to the central axis "Z-Z" thereof.

In order to anchor the membrane 18 to a part of the apparatus 1, said part of the apparatus 1 comprises a central stem 23 coupled to a first and to a second flange 24, 25 spaced from each other and coaxial with the central stem 23. The central stem 23 is extended upward from the half-shell 14 of the lower portion 12 and along the central axis "Y-Y" of the apparatus 1. The first flange 24 is positioned on the half-shell 14 of the lower portion 12. The second flange 25 is carried by an upper end of the central stem 23. Each of said first and second flange 24, 25 has a circumferential anchoring zone or seat which is configured for housing one of the radially inner circumferential edges 19 of the membrane 18. The stem 23 is movable between a lifted position and a lowered position.

When the membrane 18 is installed on a part of the apparatus 1 with the circumferential edges 19 engaged in the circumferential anchoring seats, this lies around the central stem 23 and radially inside with respect to the circumferential sectors 16. In addition, the membrane 18 internally delimits an expandable chamber 26.

Per se known devices, not illustrated, are configured for moving the abovementioned parts of the apparatus 1 between the indicated positions.

The apparatus 1 also comprises a generator and/or a tank of a hot and pressurized fluid (up to 30 bar), not illustrated since of known type, operatively connected to the expandable chamber 26 for inflating the membrane 18. Such fluid can for example be nitrogen or water vapour.

The apparatus 1 also comprises a vacuum pump, not illustrated since of known type, operatively connected or connectable to the expandable chamber 26, in order to reduce the pressure inside the expandable chamber below a pressure outside said expandable chamber and collapse/contract the membrane 18. The apparatus 1 also comprises devices operatively associated with the vulcanisation and moulding cavity and configured for administering heat, also through the hot fluid, to the tyre 2 contained in said vulcanisation and moulding cavity so as to vulcanise said tyre 2.

The membrane 18 is movable between a contracted configuration and an expanded configuration, wherein, in the contracted configuration, portions of said internal surface 21 of the membrane 18 lie in mutual contact and/or in contact with the central stem 23 and wherein, in the expanded configuration, said external surface 20 of the membrane 18 is engaged and presses against the radially inner surface of the tyre 2 during said moulding and vulcanisation step.

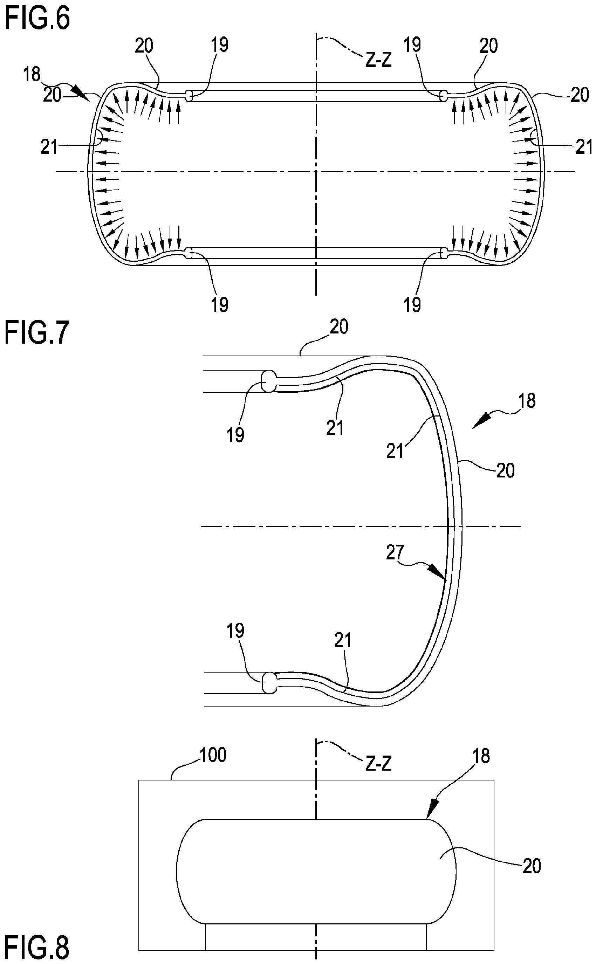

An internal protective layer 27, illustrated in figures 7, 9, 10 and 11, is present on the internal surface 21 of the membrane 18 and is configured for facilitating a sliding between the portions in mutual contact of the internal surface 21 of the membrane 18 and/or between the portions of the internal surface 21 of the membrane 18 and elements or parts constituting the apparatus 1 and for preventing a direct contact with the hot fluid that is introduced in the expandable chamber 26.

The membrane 18 can also be provided with an external protective layer applied on the external surface 20, in order to facilitate the separation of the membrane 18 itself from the radially inner surface of the moulded and vulcanised tyre 2. The external protective layer is not represented in the enclosed drawings since it is per se known.

In the non-limiting embodiment described herein, once the membrane 18 made of butyl rubber is built, the internal protective layer 27 and, possibly, the external protective layer is/are applied before mounting said membrane 18 on the parts constituting the apparatus 1.

For such purpose and in accordance with the process for treating a membrane for tyre moulding and vulcanisation apparatuses according to the present invention, a substantially crosslinkable polysiloxane composition is prepared and such composition is spread by means of a sponge or a brush or sprayed on the internal surface 21 and possibly also on the external surface 20 so as to entirely cover it/them and in a uniform manner (as illustrated schematically in figure 6). During the application, the substantially crosslinkable composition can be in liquid form or semi-sold form or substantially gaseous.

For example, the substantially crosslinkable polysiloxane composition comprises at least one reactive polysiloxane oil and at least one crosslinking agent configured for reacting with the reactive polysiloxane oil. For example, the substantially crosslinkable polysiloxane composition is of the type described in the abovementioned document WO 2015/166411 incorporated herein for reference purposes.

The quantity of substantially crosslinkable polysiloxane composition applied on the internal surface 21 depends on the dimensions of the tyre 2. For example, said quantity is comprised between about 5 g and about 30 g.

Once the composition is applied, possible excess product and/or liquids are eliminated and the membrane 18 is placed in an oven 100 or stove (figure 8) for a time sufficient for the crosslinking of the abovementioned composition. For example, the membrane 18 is maintained at a temperature comprised between about 140°C and about 180°C for a heating time comprised between about 50 minutes and about 70 minutes.

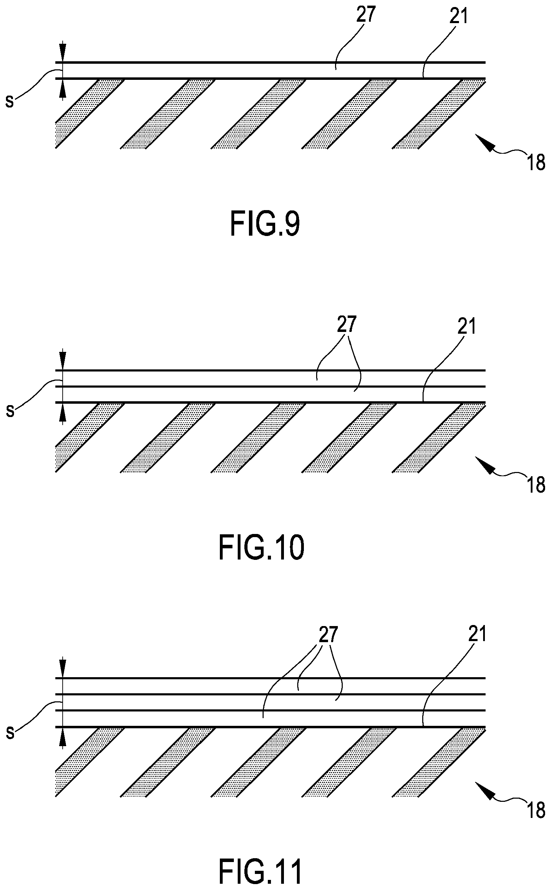

Once the stay time in the oven 100 has terminated, the membrane 18 is extracted and allowed to cool at room temperature for a cooling time comprised between about 2 hours and about 4.5 hours in an aerated and clean place. At the end of the just-described process, the membrane 18 has a single internal protective layer 27, as illustrated in figure 9. The internal protective layer 27 adheres to the membrane 18 and follows the movements and the deformations thereof, i.e. it is flexible and preferably also elastic, substantially like the butyl rubber of the membrane 18. The internal protective layer 27 has a thickness "s" for example comprised between about 0.025 mm and about 0.10 mm.

The internal protective layer 27 is anti-adherent, in the sense that a portion thereof does not remain attached to another (when portions of the internal surface 21 of the membrane 18 lie in mutual contact) or to the elements constituting the apparatus 1. The internal protective layer 27 is anti-abrasive, in the sense that a portion thereof tends to slide on the other (when portions of the internal surface 21 of the membrane lie in mutual contact) or on the elements constituting of the apparatus 1.

In accordance with the present invention, provision is therefore made for facilitating a sliding between the portions in mutual contact of the internal surface of the membrane 18 and/or between the portions of the internal surface of the membrane 18 and the elements constituting the apparatus 1 and/or for preventing a direct contact with a fluid inside the membrane 18 by means of the application of at least one internal protective layer 27 on the internal surface 21 of said membrane 18.

There are more than one internal protective layer 27 and possibly more than one the external protective layer. According to embodiment variants, provision is made for applying two (figure 10), three (figure 11) or even four internal protective layers 27 that are mutually superimposed. A total thickness "s" of the superimposed internal protective layers 27 (from one to four) is for example comprised between about 0.02 mm and about 0.4 mm. In such embodiment variants, in order to make each internal protective layer 27, the above-described operations (application, crosslinking in oven and cooling) can be repeated multiple times.

In the above-described example, the same substantially crosslinkable composition is applied on the internal surface 21 and on the external surface 20. The external protective layer can be applied with the same modes of application of the internal protective layer 27 or with different modes. For example, provision is made for applying the external protective layer before, after or simultaneously with the internal protective layer. Once the composition is applied both on the internal surface 21 and on the external surface 20, the membrane 18 is positioned in the oven 100 and then allowed to cool in order to obtain the simultaneous crosslinking both of the internal protective layer 27 and of the external protective layer.

Once the membrane 18 is mounted on the parts constituting the apparatus 1, the apparatus 1 is ready to actuate a process for vulcanising and moulding tyres 2, it too part of the present invention, i.e. for moulding and vulcanising one batch of tyres 2 after another.

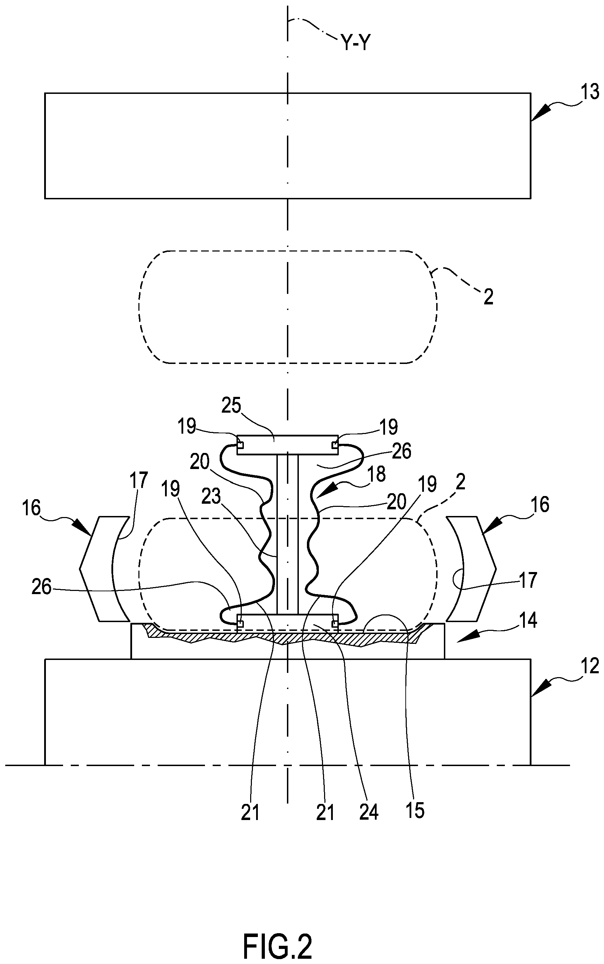

With reference to the figures 1 - 5, while the lower portion 12 and the upper portion 13 are in the first position thereof, in which they lie mutually spaced, the circumferential sectors 16 are in the first position thereof, in which they are circumferentially spaced from each other and more distant from the central axis "Y-Y", and the stem 23 is in the lifted position (figure 2), the vacuum pump maintains a pressure inside the expandable chamber 26 that is below a pressure outside said expandable chamber 26. In this manner, the membrane 18 is maintained in a contracted configuration and a portion thereof in proximity to an axial symmetry plane thereof lies grouped/crushed against the stem 23. Portions of the internal surface 21 of the membrane 18, more precisely of the internal protective layer 27, therefore lie in mutual contact and/or in contact with elements constituting the apparatus 1, in particular with the stem 23 and with the first and the second flange 24, 25. A green tyre 2 is situated between the circumferential sectors 16 and abutted against the half-shell 14 of the lower portion 12, making the second flange 25, the stem 23 and the membrane 18 pass through the central opening of the tyre 2 delimited by the beads 7. In this configuration, the external surface 20 of the membrane 18 is spaced from a radially inner surface of the green tyre 2, i.e. from the liner 5.

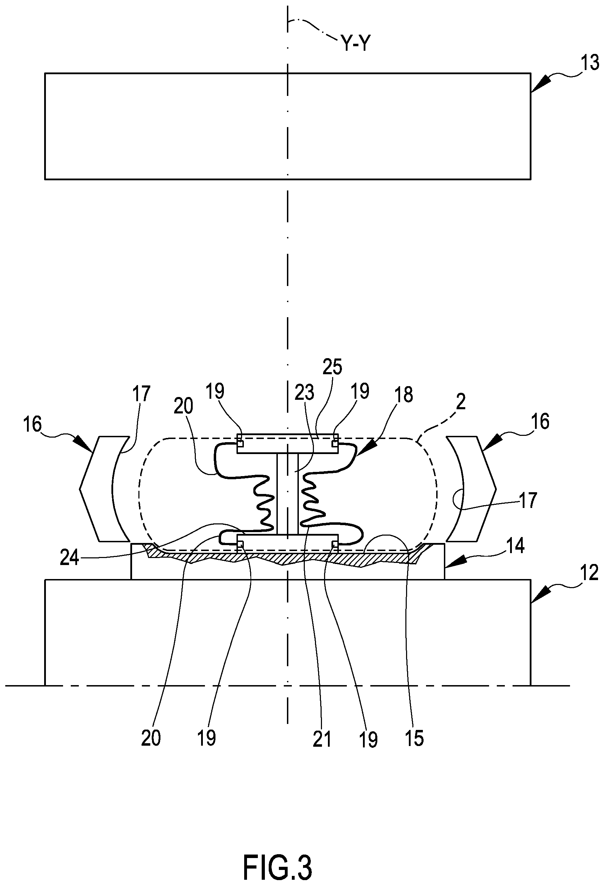

After having positioned the green tyre 2, the stem 23 and the second flange 25 are brought into the lowered position (figure 3) in which the membrane 18 is further grouped/crushed and portions of the internal protective layer 27 slide on each other, on the stem 23 and on the first and on the second flange 24, 25.

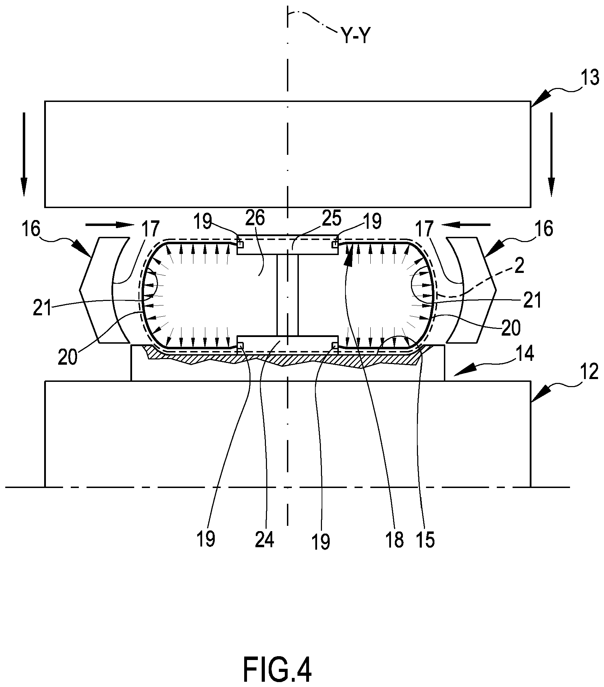

At this point, the vulcanisation mould is closed, bringing the lower portion 12 and the upper portion 13 into the second position thereof, in which they lie adjacent to each other, and radially contracting the circumferential sectors 16 up to bringing them into the second position thereof, in which they are circumferentially adjacent to each other and closer to the central axis "Y-Y". When the vulcanisation mould is closed, the anchoring zones or seats are positioned at the portions of the vulcanisation mould configured for receiving beads 7 of the tyre 2. The hot and pressurized fluid is introduced into the expandable chamber 26 so as to inflate the membrane 18 and bring it into the expanded configuration, in which the external surface 20 is engaged and presses against the radially inner surface of the tyre 2 (figure 4). In such expanded or inflated configuration, the membrane 18 has a substantially toroidal shape that copies a radially inner shape of the tyre 2. Then, heat is administered to the tyre 2 placed in the vulcanisation and moulding cavity so as to vulcanise said tyre 2.

After the necessary time has passed, the vulcanisation mould is open and the membrane 18 is once again contracted in order to space it from the radially inner surface of the tyre 2. For such purpose, the hot fluid is extracted and a pressure inside the expandable chamber 26 is brought below an external pressure. The moulded and vulcanised tyre 2 is extracted from vulcanisation mould and another green tyre 2 can be loaded into the vulcanisation mould.

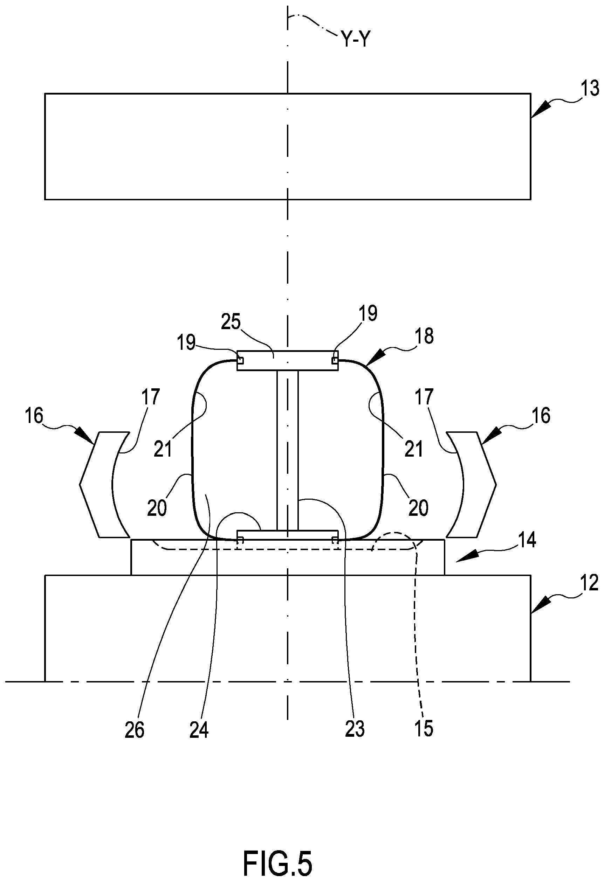

When the apparatus 1 is stopped and in a rest configuration, the vulcanisation mould is open, the stem 23 is in the lifted position and a pressure inside the expandable chamber 26 is equal to the external pressure, i.e. equal to the atmospheric pressure. The membrane 18 takes on a barrel configuration (figure 5).

### COMPARATIVE TESTS

As can be ascertained from the tests presented herein, the presence of one or more internal protective layers 27 allows executed a number of moulding and vulcanising steps, before substituting the membrane 18 since it is worn or broken, that is even 300% greater than the number of cycles carried out when employing the membrane 18 lacking the aforesaid internal protective layer/layers 27.

In the following Table 1, the results of comparative tests executed on the apparatuses A, B, C and D are reported. The apparatus A is provided with membrane 18 without any internal protective layer 27. The apparatuses B, C and D are instead provided with membranes provided with internal protective layers 27.

Each internal protective layer 27 comprises at least one reactive polysiloxane oil and at least one crosslinking agent configured for reacting with the reactive polysiloxane oil.

The number of moulding and vulcanising cycles (equal to the number of vulcanised and moulded tyres) is the number at which wear of the membrane and/or breakage of the same is evident. Said number was normalized to 100 for the membrane lacking the internal protective layer/layers.

**Table 1**

| **Test No.** | **Apparat us** | **Test duratio n** | **No. normalised moulding and vulcanisation cycles (%)** | **No. internal protective layers applied** | **No. external protective layers applied** |
|---|---|---|---|---|---|
| 1 | A | 7 days | 100 | - | 3 |
| 2 | B | 13 days | 261 | 2 | 3 |
| 3 | B | 8 days | 211 | 2 | 3 |
| 4 | B | 9 days | 288 | 2 | 3 |
| 5 | C | 10 days | 371 | 3 | 4 |
| 6 | D | 10 days | 381 | 3 | 4 |
| 7 | C | 9 days | 332 | 3 | 4 |
| 8 | D | 8 days | 308 | 3 | 4 |

As can be observed, the number of moulding and vulcanisation cycles, i.e. the number of vulcanised and moulded tyres, of the apparatuses B, C and D, provided with membrane 18 with internal protective layers 27, is considerably greater than the number of moulding and vulcanisation cycles of the apparatus A, even given the same external protective layers.

Reported in the following Tables 2 and 3 are the results of further comparative tests between membranes according to the invention provided with a single internal protective layer 27 and membranes according to the invention provided with three internal protective layers 27. Also in these tables, the number of moulding and vulcanisation cycles (equal to the number of vulcanised and moulded tyres) is the number at which wear of the membrane and/or breakage of the same is evident. Said number also in this case is normalised to 100 for the membrane lacking the internal protective layer/layers.

**Table 2**

| **Test No.** | **No. normalised moulding and vulcanisation cycles (%)** | **No. internal protective layers applied** |
|---|---|---|
| 1 | 100 | - |
| 2 | 204 | 1 |
| 3 | 178 | 1 |
| 4 | 214 | 1 |
| 5 | 201 | 1 |

**Table 3**

| **Test No.** | **No. normalised moulding and vulcanisation cycles (%)** | **No. internal protective layers applied** |
|---|---|---|
| 1 | 100 | - |
| 2 | 279 | 3 |
| 3 | 248 | 3 |
| 4 | 474 | 3 |
| 5 | 302 | 3 |
| 6 | 171 | 3 |
| 7 | 348 | 3 |
| 8 | 403 | 3 |
| 9 | 313 | 3 |
| 10 | 366 | 3 |
| 11 | 393 | 3 |

As can be observed, on average, the membranes with three internal protective layers have a much higher performance than those with a single internal protective layer. The Applicant deems that the substantially crosslinkable composition adheres better to the internal surface and covers it in a more uniform manner if applied multiple times.

With regard to the membranes 18 employed in the aforesaid tests, these were treated on 100% of their external surface with the substantially crosslinkable polysiloxane composition Mono-Lube^{®} 1100 (Chem-Trend^{®} Corp.). Such membranes 18 had a diameter of 540 mm and were attained via injection moulding and crosslinking of butyl rubber and phenolic resins with non-smooth external surface, in order to improve the air leakage during the vulcanisation of the tyre.

Before the covering, the impurities were removed from the membranes, and the latter were prepared for the deposition of the composition by means of use of a hydrocarbon solvent. The covering was applied with a sponge and about 20 g of composition were applied for each covering.

After each covering, each membrane was left at room temperature for about 30 minutes, then placed in an oven at 160°C for 1h in order to obtain the crosslinking of the polysiloxane film and cooled to room temperature (about 25°C), by leaving it air-dry for at least 4 hours. The treatment of the membrane comprising covering with substantially crosslinkable polysiloxane composition and crosslinking of the same was carried out from one to four times.

## Claims

1. Process for treating a membrane for vulcanisation apparatuses (1) for vulcanising and moulding tyres, wherein the apparatus (1) comprises:
a vulcanisation mould internally delimiting a vulcanisation and moulding cavity having a shape corresponding to an external shape to be conferred to a tyre (2) once moulded and vulcanised;
devices operatively associated with the vulcanisation and moulding cavity and configured for administering heat to the tyre (2) contained in said vulcanisation and moulding cavity so as to vulcanise said tyre (2);
a membrane (18) arranged in the vulcanisation and moulding cavity; wherein the membrane (18) is movable at least between a contracted configuration and an expanded configuration; wherein in the contracted configuration, an external surface (20) of the membrane (18) is spaced from a radially inner surface (5) of the tyre (2) and wherein portions of an internal surface (21) of the membrane (18), opposite the external surface (20), lie in mutual contact and/or in contact with elements of said apparatus (1);
wherein in the expanded configuration, the external surface (20) of the membrane (18) is engaged and presses against the radially inner surface (5) of the tyre (2);
wherein the process comprises:
- preparing the membrane (18) comprising the external surface (20) and the internal surface (21) opposite the external surface (20);
- applying at least one internal protective layer (27) on the internal surface (21);
**characterized in that** applying said at least one internal protective layer (27) comprises applying at least two internal protective layers (27) that are mutually superimposed by preparing a substantially crosslinkable composition and:
a) covering the internal surface (21) with said substantially crosslinkable composition;
b) crosslinking said substantially crosslinkable composition on the internal surface (21);
c) repeating the operations a) and b) at least once.

2. Process according to claim 1, comprising: covering the entire internal surface (21) with said at least one internal protective layer (27).

3. Process according to claim 1, wherein the operations a) and b) are repeated at least twice.

4. Process according to any one of claims 1 to 3, wherein the operation a) comprises:
- applying the substantially crosslinkable composition on the internal surface (21) by means of a sponge or a brush; or
- spraying the substantially crosslinkable composition on the internal surface (21).

5. Process according to any one of claims 1 to 4, wherein the operation a) comprises: applying a quantity of substantially crosslinkable composition comprised between 5 g and 30 g.

6. Process according to any one of claims 1 to 5, wherein the operation b) comprises: heating the membrane (18) in an oven (100).

7. Process according to claim 6, wherein the membrane (18) is placed in the oven at a temperature comprised between 140°C and 180°C for a heating time comprised between 50 minutes and 70 minutes.

8. Process according to claim 6 or 7, comprising: extracting the membrane (18) from the oven (100) and allowing it to cool at room temperature for a cooling time comprised between 2 hours and 4.5 hours.

9. Process according to one of claims 1 to 8, wherein the substantially crosslinkable composition is polysiloxane and comprises: at least one reactive polysiloxane oil, at least one crosslinking agent configured for reacting with the reactive polysiloxane oil.

10. Process for vulcanising and moulding tyres, comprising:
- arranging a green tyre (2) in a vulcanisation and moulding cavity of a vulcanisation mould belonging to a vulcanisation apparatus (1), wherein the vulcanisation and moulding cavity has a shape corresponding to an external shape to be conferred to the tyre (2) once moulded and vulcanised;
- inflating a membrane (18) arranged in the vulcanisation and moulding cavity up to engaging and pressing an external surface (20) of the membrane (18) against a radially inner surface (5) of the tyre (2);
- administering heat to the tyre (2) in said vulcanisation and moulding cavity so as to vulcanise said tyre (2);
- contracting the membrane (18) in order to space it from the radially inner surface (5) of the tyre (2) and up to bringing portions of an internal surface (21) of the membrane (18), opposite the external surface (20), in mutual contact and/or in contact with elements of said apparatus (1);
- extracting the tyre (2) from the vulcanisation and moulding cavity; **characterized in that** at least two internal protective layers (27) that are mutually superimposed are applied on the internal surface (21) of the membrane (18);
wherein said at least two internal protective layers (27) are applied by preparing a substantially crosslinkable composition and:
a) covering the internal surface (21) with said substantially crosslinkable composition;
b) crosslinking said substantially crosslinkable composition on the internal surface (21);
c) repeating the operations a) and b) at least once.

11. Process according to claim 10, wherein said at least two internal protective layers (27) are applied on the entire internal surface (21).

12. Process according to claim 10 or 11, wherein said at least two internal protective layers (27) have a thickness (s) greater than 0.02 mm and smaller than 0.1 mm.

13. Process according to one of claims 10 to 12, wherein said at least two internal protective layers (27) comprise polysiloxane.

14. Membrane for vulcanisation apparatuses (1) for vulcanising and moulding tyres, comprising:
an external surface (20) configured for being engaged with a radially inner surface (5) of a tyre (2) enclosed in a vulcanisation and moulding cavity of a vulcanisation mould during a step of vulcanising and moulding said tyre (2);
an internal surface (21) opposite the external surface (20) and delimiting an expandable chamber (26);
said membrane (18) being movable in use conditions at least between a contracted configuration and an expanded configuration, wherein, in the contracted configuration, portions of said internal surface (21) of the membrane (18) lie in mutual contact and/or in contact with elements of said apparatus (1) and wherein, in the expanded configuration, said external surface (20) of the membrane (18) is engaged and presses against the radially inner surface (5) of the tyre (2) during said vulcanisation and moulding step;
**characterized in that** it comprises at least two internal protective layers (27) that are mutually superimposed and are applied on the internal surface (21); wherein said at least two internal protective layers (27) are applied by preparing a substantially crosslinkable composition and:
a) covering the internal surface (21) with said substantially crosslinkable composition;
b) crosslinking said substantially crosslinkable composition on the internal surface (21);
c) repeating the operations a) and b) at least once.

15. Vulcanisation apparatus (1) for vulcanising and moulding tyres, comprising:
a vulcanisation mould internally delimiting a vulcanisation and moulding cavity having a shape corresponding to an external shape to be conferred to a tyre (2) once moulded and vulcanised;
devices operatively associated with the vulcanisation and moulding cavity and configured for administering heat to the tyre (2) contained in said vulcanisation and moulding cavity so as to vulcanise said tyre (2);
a membrane (18) in accordance with claim 14.

## Patentansprüche

1. Verfahren zur Behandlung einer Membran für Vulkanisationsvorrichtungen (1) zum Vulkanisieren und Formen von Reifen, wobei die Vorrichtung (1) umfasst:
eine Vulkanisationsform, die im Inneren einen Vulkanisations- und Formungshohlraum begrenzt, der eine Form aufweist, die einer äußeren Form entspricht, die einem Reifen (2) verliehen werden soll, sobald er geformt und vulkanisiert ist.
Vorrichtungen, die dem Vulkanisierungs- und Formungshohlraum zugeordnet sind und dafür konfiguriert sind, dem in dem Vulkanisierungs- und Formungshohlraum enthaltenen Reifen (2) Wärme zuzuführen, um den Reifen (2) zu vulkanisieren;
eine Membran (18), die in dem Vulkanisierungs- und Formungshohlraum angeordnet ist,
wobei die Membran (18) mindestens zwischen einer zusammengezogenen Konfiguration und einer ausgedehnten Konfiguration beweglich ist, wobei in der zusammengezogenen Konfiguration eine äußere Oberfläche (20) der Membran (18) von einer radial inneren Oberfläche (5) des Reifens (2) beabstandet ist und wobei Abschnitte einer inneren Oberfläche (21) der Membran (18), die der äußeren Oberfläche (20) gegenüberliegen, in gegenseitigem Kontakt und/oder in Kontakt mit Elementen der Vorrichtung (1) liegen;
wobei in der ausgedehnten Konfiguration die äußere Oberfläche (20) der Membran (18) mit der radial inneren Oberfläche (5) des Reifens (2) in Eingriff steht und gegen diese drückt;
wobei das Verfahren umfasst:
- Vorbereiten der Membran (18), die die äußere Oberfläche (20) und die der äußeren Oberfläche (20) gegenüberliegende innere Oberfläche (21) umfasst,
- Aufbringen mindestens einer inneren Schutzschicht (27) auf die innere Oberfläche (21);
**dadurch gekennzeichnet, dass** das Aufbringen der mindestens einen inneren Schutzschicht (27) das Aufbringen von mindestens zwei inneren Schutzschichten (27) umfasst, die sich gegenseitig überlagern, indem eine im Wesentlichen vernetzbare Zusammensetzung hergestellt wird und:
a) Bedecken der inneren Oberfläche (21) mit der im Wesentlichen vernetzbaren Zusammensetzung;
b) Vernetzen der im Wesentlichen vernetzbaren Zusammensetzung auf der inneren Oberfläche (21);
c) mindestens einmaliges Wiederholen der Vorgänge a) und b).

2. Verfahren nach Anspruch 1, umfassend: Bedecken der gesamten inneren Oberfläche (21) mit der mindestens einen inneren Schutzschicht (27).

3. Verfahren nach Anspruch 1, wobei die Vorgänge a) und b) mindestens zweimal wiederholt werden.

4. Verfahren nach einem der Ansprüche 1 bis 3, wobei der Vorgang a) umfasst:
- Auftragen der im Wesentlichen vernetzbaren Zusammensetzung auf die innere Oberfläche (21) mit Hilfe eines Schwamms oder einer Bürste; oder
- Sprühen der im Wesentlichen vernetzbaren Zusammensetzung auf die innere Oberfläche (21).

5. Verfahren nach einem der Ansprüche 1 bis 4, wobei der Vorgang a) umfasst: Auftragen einer Menge der im Wesentlichen vernetzbaren Zusammensetzung, die zwischen 5 g und 30 g liegt.

6. Verfahren nach einem der Ansprüche 1 bis 5, wobei der Vorgang b) umfasst: Erhitzen der Membran (18) in einem Ofen (100).

7. Verfahren nach Anspruch 6, wobei die Membran (18) bei einer Temperatur zwischen 140 °C und 180 °C für eine Heizzeit zwischen 50 Minuten und 70 Minuten in den Ofen gelegt wird.

8. Verfahren nach Anspruch 6 oder 7, umfassend: Herausnehmen der Membran (18) aus dem Ofen (100) und Abkühlenlassen bei Raumtemperatur für eine Abkühlzeit zwischen 2 Stunden und 4,5 Stunden.

9. Verfahren nach einem der Ansprüche 1 bis 8, wobei die im Wesentlichen vernetzbare Zusammensetzung Polysiloxan ist und umfasst: mindestens ein reaktives Polysiloxanöl, mindestens ein Vernetzungsmittel, das für die Reaktion mit dem reaktiven Polysiloxanöl konfiguriert ist.

10. Verfahren zum Vulkanisieren und Formen von Reifen, umfassend:
- Anordnen eines Reifenrohlings (2) in einem Vulkanisations- und Formungshohlraum einer Vulkanisationsform, die zu einer Vulkanisationsvorrichtung (1) gehört, wobei der Vulkanisations- und Formungshohlraum eine Form aufweist, die einer äußeren Form entspricht, die dem Reifen (2) verliehen werden soll, sobald er geformt und vulkanisiert ist,
- Aufblasen einer in dem Vulkanisations- und Formungshohlraum angeordneten Membran (18) bis zum Eingreifen und Pressen einer äußeren Oberfläche (20) der Membran (18) gegen eine radiale innere Oberfläche (5) des Reifens (2);
- Zuführen von Wärme zu dem Reifen (2) in dem Vulkanisations- und Formungshohlraum, um den Reifen (2) zu vulkanisieren;
- Zusammenziehen der Membran (18), um sie von der radial inneren Oberfläche (5) des Reifens (2) zu beabstanden und um Abschnitte einer inneren Oberfläche (21) der Membran (18), die der äußeren Oberfläche (20) gegenüberliegt, in gegenseitigen Kontakt und/oder in Kontakt mit Elementen der Vorrichtung (1) zu bringen;
- Herausziehen des Reifens (2) aus dem Vulkanisierungs- und Formungshohlraum;
**dadurch gekennzeichnet, dass** mindestens zwei innere Schutzschichten (27), die sich gegenseitig überlagern, auf der inneren Oberfläche (21) der Membran (18) aufgebracht werden;
wobei die mindestens zwei inneren Schutzschichten (27) durch Herstellung einer im Wesentlichen vernetzbaren Zusammensetzung aufgebracht werden und:
a) Bedecken der inneren Oberfläche (21) mit der im Wesentlichen vernetzbaren Zusammensetzung;
b) Vernetzen der im Wesentlichen vernetzbaren Zusammensetzung auf der inneren Oberfläche (21);
c) mindestens einmaliges Wiederholen der Vorgänge a) und b).

11. Verfahren nach Anspruch 10, wobei die mindestens zwei inneren Schutzschichten (27) auf die gesamte innere Oberfläche (21) aufgebracht werden.

12. Verfahren nach Anspruch 10 oder 11, wobei die mindestens zwei inneren Schutzschichten (27) eine Dicke (s) von mehr als 0,02 mm und weniger als 0,1 mm aufweisen.

13. Verfahren nach einem der Ansprüche 10 bis 12, wobei die mindestens zwei inneren Schutzschichten (27) Polysiloxan umfassen.

14. Membran für Vulkanisationsvorrichtungen (1) zum Vulkanisieren und Formen von Reifen, umfassend:
eine äußere Oberfläche (20), die dafür konfiguriert ist, mit einer radial inneren Oberfläche (5) eines Reifens (2), die in einem Vulkanisations- und Formungshohlraum einer Vulkanisationsform eingeschlossen ist, während eines Schrittes des Vulkanisierens und Formens des Reifens (2) in Eingriff gebracht zu werden;
eine innere Oberfläche (21), die der äußeren Oberfläche (20) gegenüberliegt und eine ausdehnbare Kammer (26) abgrenzt;
wobei die Membran (18) im Gebrauchszustand mindestens zwischen einer zusammengezogenen Konfiguration und einer ausgedehnten Konfiguration beweglich ist, wobei in der zusammengezogenen Konfiguration Abschnitte der inneren Oberfläche (21) der Membran (18) in gegenseitigem Kontakt und/oder in Kontakt mit Elementen der Vorrichtung (1) liegen und wobei in der ausgedehnten Konfiguration die äußere Oberfläche (20) der Membran (18) mit der radial inneren Oberfläche (5) des Reifens (2) während des Vulkanisations- und Formungsschritts in Eingriff steht und gegen diese drückt;
**dadurch gekennzeichnet, dass** sie mindestens zwei innere Schutzschichten (27) umfasst, die sich gegenseitig überlagern und auf der inneren Oberfläche (21) aufgebracht sind, wobei die mindestens zwei inneren Schutzschichten (27) durch Herstellung einer im Wesentlichen vernetzbaren Zusammensetzung aufgebracht werden und:
a) Bedecken der inneren Oberfläche (21) mit der im Wesentlichen vernetzbaren Zusammensetzung;
b) Vernetzen der im Wesentlichen vernetzbaren Zusammensetzung auf der inneren Oberfläche (21);
c) mindestens einmaliges Wiederholen der Vorgänge a) und b).

15. Vulkanisiervorrichtung (1) zum Vulkanisieren und Formen von Reifen, umfassend: eine Vulkanisationsform, die im Inneren einen Vulkanisations- und Formungshohlraum begrenzt, der eine Form aufweist, die einer äußeren Form entspricht, die einem Reifen (2) verliehen werden soll, sobald er geformt und vulkanisiert ist.
Vorrichtungen, die dem Vulkanisierungs- und Formungshohlraum zugeordnet sind und dafür konfiguriert sind, dem in dem Vulkanisierungs- und Formungshohlraum enthaltenen Reifen (2) Wärme zuzuführen, um den Reifen (2) zu vulkanisieren;
eine Membran (18) nach Anspruch 14.

## Revendications

1. Procédé pour traiter une membrane pour des appareils de vulcanisation (1) pour vulcaniser et mouler des pneus, dans lequel l'appareil (1) comprend :
un moule de vulcanisation délimitant de façon interne une cavité de vulcanisation et de moulage ayant une forme correspondant à une forme externe destinée à être conférée à un pneu (2) une fois moulé et vulcanisé ;
des dispositifs fonctionnellement associés à la cavité de vulcanisation et de moulage et configurés pour administrer de la chaleur au pneu (2) contenu dans ladite cavité de vulcanisation et de moulage afin de vulcaniser ledit pneu (2) ;
une membrane (18) agencée dans la cavité de vulcanisation et de moulage ;
dans lequel la membrane (18) est mobile au moins entre une configuration contractée et une configuration agrandie ; dans lequel, dans la configuration contractée, une surface externe (20) de la membrane (18) est espacée d'une surface radialement intérieure (5) du pneu (2) et dans lequel des parties d'une surface interne (21) de la membrane (18), opposée à la surface externe (20), se trouvent en contact mutuel et/ou en contact avec des éléments dudit appareil (1) ;
dans lequel, dans la configuration agrandie, la surface externe (20) de la membrane (18) est en prise avec et presse contre la surface radialement intérieure (5) du pneu (2) ;
dans lequel le procédé comprend :
- la préparation de la membrane (18) comprenant la surface externe (20) et la surface interne (21) opposée à la surface externe (20) ;
- l'application d'au moins une couche protectrice interne (27) sur la surface interne (21) ;
**caractérisé en ce que** l'application de ladite au moins une couche protectrice interne (27) comprend l'application d'au moins deux couches protectrices internes (27) qui sont mutuellement superposées par le biais de la préparation d'une composition sensiblement réticulable, et de :
a) la couverture de la surface interne (21) avec ladite composition sensiblement réticulable ;
b) la réticulation de ladite composition sensiblement réticulable sur la surface interne (21) ;
c) la répétition des opérations a) et b) au moins une fois.

2. Procédé selon la revendication 1, comprenant : la couverture de la surface interne entière (21) avec ladite au moins une couche protectrice interne (27).

3. Procédé selon la revendication 1, dans lequel les opérations a) et b) sont répétées au moins deux fois.

4. Procédé selon l'une quelconque des revendications 1 à 3, dans lequel l'opération a) comprend :
- l'application de la composition sensiblement réticulable sur la surface interne (21) au moyen d'une éponge ou d'un pinceau ; ou
- la pulvérisation de la composition sensiblement réticulable sur la surface interne (21).

5. Procédé selon l'une quelconque des revendications 1 à 4, dans lequel l'opération a) comprend : l'application d'une quantité de composition sensiblement réticulable comprise entre 5 g et 30 g.

6. Procédé selon l'une quelconque des revendications 1 à 5, dans lequel l'opération b) comprend : le chauffage de la membrane (18) dans un four (100).

7. Procédé selon la revendication 6, dans lequel la membrane (18) est placée dans le four à une température comprise entre 140 °C et 180 °C pendant un temps de chauffage compris entre 50 minutes et 70 minutes.

8. Procédé selon la revendication 6 ou 7, comprenant : l'extraction de la membrane (18) à partir du four (100) et son refroidissement libre à température ambiante pendant un temps de refroidissement compris entre 2 heures et 4,5 heures.

9. Procédé selon l'une des revendications 1 à 8, dans lequel la composition sensiblement réticulable est du polysiloxane et comprend : au moins une huile de polysiloxane réactive, au moins un agent de réticulation configuré pour réagir avec l'huile de polysiloxane réactive.

10. Procédé pour vulcaniser et mouler des pneus, comprenant :
- l'agencement d'un pneu vert (2) dans une cavité de vulcanisation et de moulage d'un moule de vulcanisation appartenant à un appareil de vulcanisation (1), dans lequel la cavité de vulcanisation et de moulage a une forme correspondant à une forme externe destinée à être conférée au pneu (2) une fois moulé et vulcanisé;
- le gonflage d'une membrane (18) agencée dans la cavité de vulcanisation et de moulage jusqu'à ce qu'elle entre en prise et presse une surface externe (20) de la membrane (18) contre une surface radialement intérieure (5) du pneu (2) ;
- l'administration de chaleur au pneu (2) dans ladite cavité de vulcanisation et de moulage afin de vulcaniser ledit pneu (2) ;
- la contraction de la membrane (18) afin de l'espacer de la surface radialement intérieure (5) du pneu (2) et jusqu'à la mise de parties d'une surface interne (21) de la membrane (18), opposée à la surface externe (20), en contact mutuel et/ou en contact avec des éléments dudit appareil (1) ;
- l'extraction du pneu (2) à partir de la cavité de vulcanisation et de moulage ;
**caractérisé en ce qu'**au moins deux couches protectrices internes (27) qui sont mutuellement superposées sont appliquées sur la surface interne (21) de la membrane (18) ;
dans lequel lesdites au moins deux couches protectrices internes (27) sont appliquées par le biais de la préparation d'une composition sensiblement réticulable, et de :
a) la couverture de la surface interne (21) avec ladite composition sensiblement réticulable ;
b) la réticulation de ladite composition sensiblement réticulable sur la surface interne (21) ;
c) la répétition des opérations a) et b) au moins une fois.

11. Procédé selon la revendication 10, dans lequel lesdites au moins deux couches protectrices internes (27) sont appliquées sur la surface interne entière (21).

12. Procédé selon la revendication 10 ou 11, dans lequel lesdites au moins deux couches protectrices internes (27) ont une épaisseur (s) supérieure à 0,02 mm et inférieure à 0,1 mm.

13. Procédé selon l'une des revendications 10 à 12, dans lequel lesdites au moins deux couches protectrices internes (27) comprennent du polysiloxane.

14. Membrane pour appareils de vulcanisation (1) pour vulcaniser et mouler des pneus, comprenant :
une surface externe (20) configurée pour être en prise avec une surface radialement intérieure (5) d'un pneu (2) enfermé dans une cavité de vulcanisation et de moulage d'un moule de vulcanisation durant une étape de vulcanisation et de moulage dudit pneu (2) ;
une surface interne (21) opposée à la surface externe (20) et délimitant une chambre agrandissable (26) ;
ladite membrane (18) étant mobile dans des conditions d'utilisation au moins entre une configuration contractée et une configuration agrandie, dans laquelle, dans la configuration contractée, des parties de ladite surface interne (21) de la membrane (18) se trouvent en contact mutuel et/ou en contact avec des éléments dudit appareil (1) et dans laquelle, dans la configuration agrandie, ladite surface externe (20) de la membrane (18) est en prise avec et presse contre la surface radialement intérieure (5) du pneu (2) durant ladite étape de vulcanisation et de moulage ;
**caractérisée en ce qu'**elle comprend au moins deux couches protectrices internes (27) qui sont mutuellement superposées et sont appliquées sur la surface interne (21) ; dans laquelle lesdites au moins deux couches protectrices internes (27) sont appliquées par le biais de la préparation d'une composition sensiblement réticulable, et de :
a) la couverture de la surface interne (21) avec ladite composition sensiblement réticulable ;
b) la réticulation de ladite composition sensiblement réticulable sur la surface interne (21) ;
c) la répétition des opérations a) et b) au moins une fois.

15. Appareil de vulcanisation (1) pour vulcaniser et mouler des pneus, comprenant : un moule de vulcanisation délimitant de façon interne une cavité de vulcanisation et de moulage ayant une forme correspondant à une forme externe destinée à être conférée à un pneu (2) une fois moulé et vulcanisé ;
des dispositifs fonctionnellement associés à la cavité de vulcanisation et de moulage et configurés pour administrer de la chaleur au pneu (2) contenu dans ladite cavité de vulcanisation et de moulage afin de vulcaniser ledit pneu (2) ;
une membrane (18) selon la revendication 14.
